(19) Europäisches Patentamt
European Patent Office
Office européen des brevets

(11) **EP 1 412 302 B1**

(12) **EUROPÄISCHE PATENTSCHRIFT**

(45) Veröffentlichungstag und Bekanntmachung des Hinweises auf die Patenterteilung:
**10.12.2008   Patentblatt 2008/50**

(21) Anmeldenummer: **02732346.8**

(22) Anmeldetag: **25.03.2002**

(51) Int Cl.:
***C04B 28/00*** *(2006.01)*

(86) Internationale Anmeldenummer:
**PCT/DE2002/001068**

(87) Internationale Veröffentlichungsnummer:
**WO 2002/076904 (03.10.2002 Gazette 2002/40)**

(54) **GLASHALTIGER BAUSTOFFKÖRPER ODER -BELAG**

CONSTRUCTION-MATERIAL BODY OR COATING CONTAINING GLASS

MATERIAU DE CONSTRUCTION SOUS FORME DE CORPS OU DE REVETEMENT CONTENANT DU VERRE

(84) Benannte Vertragsstaaten:
**AT BE CH CY DE DK ES FI FR GB GR IE IT LI LU MC NL PT SE TR**

(30) Priorität: **27.03.2001   DE 10115158**

(43) Veröffentlichungstag der Anmeldung:
**28.04.2004   Patentblatt 2004/18**

(73) Patentinhaber: **Verano GmbH**
**41748 Viersen (DE)**

(72) Erfinder: **Heinz Marohn**
**47803 Krefeld (DE)**

(74) Vertreter: **Bauer, Wulf**
**Bauer - Vorberg - Kayser**
**Patentanwälte**
**Lindenallee 43**
**50968 Köln (DE)**

(56) Entgegenhaltungen:
**DE-A- 2 001 171        DE-B- 2 708 839**
**FR-A- 2 307 092**

**Beschreibung**

Die Erfindung betrifft einen Baustoffkörper oder -belag, der als wesentliche Bestandteile hydraulisches Bindemittel, Zuschlagstoffe und Glasgranulat enthält.

Es ist bekannt, Glasgranulat aus Spezialgläsern oder Silicatgläser nach Verspiegelung als Effektelemente Zuschlagstoffen beizumischen, die überwiegend anorganisch gebunden werden. Gängige Praxis ist ferner Glasgranulate unterschiedlicher Herkunft mit Reaktionsharzen zu binden und davon u.a. Platten und Tafeln für Beläge und Verkleidungen herzustellen.

FR-A-2307092 offenbart einen Baubelag, der hydraulisches Bindemittel, Zuschlagstoffe und Glasgranulat enthält.

DE-A-2307092 offenbart einen Baukörper, der hydraulisches Bindemittel, Zuschlagstoffe und Glaspulver enthält.

Nachteilig bei der Verwendung von Glasgranulat insbesondere aus Silicatglas als Zuschlagstoff und Effektelement ist dessen geringe Bruchfestigkeit nach der Vermahlung und die geringe Alkalienbeständigkeit, welche bei anorganisch gebundenen Werkstoffen zu Auflösungs- bzw. Treiberscheinungen führt.

Die geringe Bruchfestigkeit von Glasgranulat aus üblichen Alkalisilikatglas ist bedingt durch feinste Mikrorisse, die bei der Herstellung entstehen. Diese Mikrorisse stellen Sollbruchstellen im Mikrometerbereich dar und führen bei mechanischer Belastung schnell zu einem Auseinanderbrechen ("Zerbröseln") der einzelnen Glaspartikel. Diese vorhandene Instabilität des Glasgranulates kann sich noch verstärken, wenn Wasser in die Mikrorisse einkondensiert und damit eine Riss-Fortpflanzung in die einzelnen Glaskörner möglich wird. Durch die Rissbildung kommt es ferner zur Bildung von scharfen Kanten, was zu Verletzungen führen kann.

Wegen der mechanischen Instabilität und mangelnden Bruchfestigkeit von Glasgranulat scheidet dessen Einsatz als Bau- und Werkstoff in Bereichen aus, in denen erhöhte Anforderungen an Sicherheit und mechanische Belastbarkeit gestellt werden. Dies ist insbesondere bei Bodenbelägen der Fall.

Nachteilig an Glasgranulat aus üblichen Alkalisilikatglas ist ferner dessen geringe Beständigkeit gegenüber Laugen, die das Siliciumdioxid des Glases herauslösen. Hierdurch wird die Einsatzmöglichkeit von Glasgranulat als Zuschlagsstoff in hydraulisch gebundenen Materialien stark eingeschränkt. Durch das an den Grenzflächen zwischen Glas und Beton bestehende basische Milieu im Beton wird die Glaskorn-Oberfläche angegriffen und aufgelöst. Es kommt zu nachteiligen Riss- und Spannungsbildungen im Beton, sogar zum Herauslösen einzelner an der Oberfläche eines betonhaltigen Belages, insbesondere eines Bodenbelages liegender Glaspartikel.

Aus der DE 41 20 764 AI ist ein betonhaltiger Belag bekannt, der aus einer Mischung von Zement, Zuschlagstoffen und granulierten Effektelementen aus Glas, das durch Hochvakuummetallisierung verspiegelt wurde, besteht.

Bekannt sind ferner Bodenbeläge auf Kunstharz-Basis, die Glasgranulat aus speziell gehärteten "Morano"-Glas enthalten. Mit einer Mohschen Härte von etwa 7,0 weist dieses Glas eine ausreichende Bruchfestigkeit auf und ist damit für den Einsatz in Bodenbelägen geeignet. Nachteilig sind jedoch die mit der Herstellung dieses speziellen Glases verbundenen Kosten.

Schließlich ist es bekannt, Fenster- oder Autoglasscheiben zur Verbesserung der Haftfähigkeit an Kunststoffen oder Metallen mit einer Beschichtung aus Silanen zu versehen. Dieser Vorgang wird allgemein als Silanisieren bezeichnet.

Der Erfindung liegt die Aufgabe zugrunde, einen Baustoffkörper oder -belag bereitzustellen, der als wesentliche Bestandteile hydraulisches Bindemittel, Zuschlagstoffe und Glasgranulat enthält und eine hohe Bruchfestigkeit, eine ausgezeichnete mechanische Belastbarkeit und eine hohe Laugenbeständigkeit aufweist.

Diese Aufgabe wird erfindungsgemäß durch einen Baustoffkörper oder - belag gelöst, der als wesentliche Bestandteile hydraulisches Bindemittel, Zuschlagstoffe und Glasgranulat enthält, wobei das Glasgranulat oberflächlich mit einer Schutzschicht beschichtet ist und die Schutzschicht mindestens eine organische Siliciumverbindung und/oder mindestens einen Duroplasten enthält.

Durch die oberflächliche Beschichtung des Glasgranulates mit einer organischen Siliciumverbindung und einem Duroplasten werden die Bruchfestigkeit des Granulates erheblich erhöht etwaige vorhandene Mikrorisse wirksam verschlössen und so ein Auseinanderbrechen der einzelnen Glaskörner verhindert. Die spezielle Schutzschicht bewirkt, dass das erfindungsgemäße Glasgranulat einheitlich eine Mohsche-Härte von etwa 6 und damit eine hohe mechanische Belastbarkeit und geringe Splitterbildung aufweist. Darüber hinaus weist das erfindungsgemäße Glasgranulat eine erheblich verbesserte Alkalibeständigkeit gegenüber üblichen Alkalisilikatglas auf. So wurde selbst nach mehrmonatigem Einschluss des Granulates in Beton keine alkalibedingte Veränderung der Oberfläche des erfindungsgemäßen Glasgranulates beobachtet.

Durch die Schutzschicht werden die unterschiedlichen mechanischen Gebrauchswerte von Gläsern unterschiedlicher Herkunft und Zusammensetzung ausgeglichen und somit für deren Weiterverarbeitung- und -bearbeitung einheitliche Voraussetzungen geschaffen.

Die Schutzschicht kann ein- oder mehrschichtig ausgebildet sein. Dies bedeutet, dass organische Siliciumverbindung und Duroplast gemeinsam in einer Schicht oder in getrennten Schichten vorliegen.

Als organische Siliciumverbindung wird vorzugsweise eine Verbindung der allgemeinen Formel

$$Y\text{-}(CH_2)_n\, SiX_3$$

eingesetzt, worin X ein Halogenatom wie Fluor, Chlor, Brom und Jod oder eine Alkoxygruppe mit 1 bis 20 Kohlenstoffatomen, Y eine Amino-, Carboxy-, Cyano-, Methacryloxy-, Epoxy-, Mercapto- oder eine gegebenenfalls alkyl-, aryl- oder aralkyl-substituierte Vinylgruppe und n eine Zahl von 0 bis 30, insbesondere von 0 bis 10, ist.

Derartige organofunktionelle Silane sind als Haftvermittler bekannt. In der vorliegenden Erfindung erfüllen sie einerseits die Funktion eines Haftvermittlers und gewährleisten eine dauerhafte Verbindung zwischen Glas und Duroplasten. Andererseits dienen sie in Verbindung mit Duroplasten als alkaliresistente, porenschließende Substanz, mit der selbst feinste Mikrorisse im Glas dauerhaft verschlossen werden.

Die Herstellung und Eigenschaften von erfindungsgemäß einsetzbaren organischen Siliciumverbindungen sind beispielsweise beschrieben "Ullmanns Enzyklopädie der technischen Chemie" (4. Auflage), Bd. 21, S. 498-499.

Erfindungsgemäß geeignete Duroplaste sind alle aus härtbaren Harzen hergestellten Kunststoffe wie Epoxid-Harze, ungesättigte Polyesterharze, Diallylphthalat-Harze, Harnstoff-Formaldehyd-Harze, MelaminFormaldehyd-Harze, Melamin-Phenol-Formaldehyd-Harze, Polyurethane, Pre-Polymere und Phenol-Formaldehyd-Harze. Vorzugsweise werden Epoxid-Harze, insbesondere solche auf Basis von Bisphenol-A bzw. Bisphenol A/Fharze, eingesetzt.

Vorzugsweise erfüllen die in der erfindungsgemäßen Beschichtung eingesetzten Duroplaste die Norm gemäß DIN 7724 (Beiblatt 2/1972).

Die Duroplaste können in beliebiger Form, beispielsweise als Preßmassen, Gießharze, Leimharze oder Lackharze eingesetzt werden. Vorzugsweise werden die Duroplaste in Form von Lacken eingesetzt.

Die Herstellung und Eigenschaften der Duroplaste sind allgemein bekannt und beispielsweise beschrieben in Bauer, Woebcken "Verarbeitung duroplastischer Formmassen", München, Hanser Verlag, 1973; "Physik der Duroplaste und anderer Polymerer", Darmstadt, Steinkopf, 1978; Saechtling "Kunststoff-Taschenbuch", 23. Ausg.: S. 2-5, S. 378-443, München, Hanser-Verlag 1986; "Ullmanns Enzyklopädie der technischen Chemie" (4. Auflage) 15, 309-335, 477-481 und Woebcken "Duroplaste, Kunststoff-Handbuch", 2. Aufl., Bd. 10, München-Wien: Hanser-Verlag, 1988.

Das Auftragen der oberflächlichen Verkappselung kann beispielsweise durch Auftragen einer organischen oder wässrigen Lösung der organischen Siliciumverbindung auf die Glasoberfläche und anschließende Überbeschichtung mit einem Lack aus duroplastischem Harz erfolgen.

Abgestimmt auf den späteren Einsatzzweck des Granulats, kann auf die Mitverwendung der Silan-Komponente verzichtet werden.

Das Verfahren kann sowohl mit kalten Glas als auch mit temperierten Glasgranulat durchgeführt werden.

Im folgenden wird die Beschichtung des Glasgranulats beispielhaft beschrieben:

## Schritt 1: Vorbehandlung des Glasgranulats mit Silan

Mögliche Einsatzformen des Silans:

a) in Reinform

b) im wäßrigem Medium

c) in einem Lösungsmittel

zu b): Das Silan wird vorzugsweise in Wasser oder einem Gemisch aus Wasser und einem Lösungsmittel (z.B. Alkohol) unter säuren- oder basenkatalytischer Hydrolyse gelöst.

Wirkkonzentration des Silans:

0-10 Gew.-%, vorzugsweise 0,1 - 5,0 Gew.-%

zu c): Das Silan wird z.B. in Alkoholen, Ketonen, Estern, oder Kohlenwasserstoffen gelöst.

Wirkkonzentration des Silans:

0-20 Gew.%, vorzugsweise :1 - 5 gew.-%

**Silanauftrag:** Der Auftrag des Silans (in Variation a bis c) auf das Glasgranulats kann durch Sprühen, Gießen, Träufeln, unter intensiver Vermischung (Verkollerung) mit einem Zwangsmischer erfolgen.

Nach ausreichender Mischdauer/Verkollerung schließt sich ein Trocknungsvorgang an, der dann abgeschlossen ist, wenn das Glasgranulat klebfrei ist und nicht mit Testchemikalien reagiert.

**Schritt 2: Beschichtung des Silan-vorbehandelten Glasgranulats mit Duroplasten**

Für die Beschichtung des Silan-vorbehandelten Glasgranulates eignen sich vorzugsweise folgende Duroplast-Systeme:

**a) 2-Komponenten-Epoxid:** Härtung durch Mischung von Epoxid-Harz (Komponente A) und Amin-Härter (Komponente B).

Vorgehensweise; Komponenten A und B werden bei Raumtemperatur extern vorgemischt und dem Glasgranulat unter starker Vermischung zugesetzt. Der Beschichtungs-Vorgang ist abgeschlossen, wenn das Glasgranulat klebefrei ist.

**b) 2-Komponenten und/oder 1Komponenten Urethan:**

Härtung durch Mischung von Polyol und Diisocyanat oder Beschichtung durch prepolymeres Isocyanat.
Vorgehensweise: wie bei a)

**c) Acrylate:** Härtung durch Mischung von Acrylat-Harz (Komponente und radikalischen Härter (Komponente B) oder Härtung durch UV-Strahlung (ohne radikalischen Härter).
Vorgehensweise:

Bei Acrylat/Radikal-Härter: wie bei a). Bei UV-Härtung: Das Acrylat wird unter intensivem Rühren dem Glasgranulat zugesetzt (bei RT). Nach homogener Acrylat-Verteilung wird das Glasgranulat unter intensivem Mischen mit UV-Licht bestrahlt. Der Vorgang ist bei Klebefreiheit des Glasgranulats abgeschlossen.

**d) Polyester:** Härtung durch Mischung von Polyester-Harz und radikalischen Härter oder durch UV-Strahlung.

Vorgehensweise: wie bei c)

**Erzielbare Schichdicken d:** Abhängig von der von der Korngröße des Glasgranulats und der Zugabemenge des Duroplast-Sytems:

$$d = \text{bis } 200 \ \mu m$$

Ebenso kann zunächst ein Gemisch aus organischer Siliciumverbindung und duroplastischem Harz in einem geeigneten Lösungsmittel hergestellt und dieses Gemisch anschließend auf die Glasoberfläche auf getragen werden.

Die Zugabe-Menge an Silan zum Duroplast-System beträgt vorzugsweise 1 - 10 Gew.-%.

Die Vorgehensweise bei der Beschichtung erfolgt wie voran beschrieben (Schritt 2 a -d).

Vorzugsweise werden organische Siliciumverbindung und Duroplast aufeinander abgestimmt. Besonders bevorzugte Kombinationen von organischer Siliciumverbindung (A) der allgemeinen Formel $Y\text{-}(CH_2)_n \, SiX_3$, in der Y, n und X die zuvor angegebenen Bedeutungen haben, und Duroplast (B) sind nachfolgend aufgeführt:

- Siliciumverbindung A mit Y = Amino- oder Epoxy-, Mercapto-Gruppe in Verbindung mit einer Epoxidharzmatrix als Duroplast (B)

- Siliciumverbindung A mit Y = Acrylat-, Methacrylat-, Vinyl-Gruppe in Verbindung mit einer Polyestermatrix, Acrylatmatrix und/oder Vinylestermatrix als Duroplast (B).

- Siliciumverbindung A mit Y = Amino-, Epoxy-, Mercapto-Gruppe in Verbindung mit einer Urethan- und/oder Isocyanatmatrix als Duroplast (B).

Hierdurch wird eine besonders dauerhafte, irreversible Haftung zwischen der Glasoberfläche und Schutzschicht erzielt.

Gemäß einer bevorzugten Ausführungsform der Erfindung wird die Außenfläche der Beschichtung zur Verbesserung der Anhaftung nachfolgender Bindemittel oder Gemenge griffig gestaltet.

Als Glasgranulat können Granulate aus beliebigen Gläsern wie Kalk-Natron-Silikat-Glas, Borosilicatglas, Quarzglas, technisches Glas, Fensterglas, Flaschenglas, Opalglas, Wirtschaftsglas, Farbglas, Kristallglas, Faserglas, Schaumglas, Verbundglas, Kron- oder Flintglas jeweils in jeder beliebigen Farbe oder Mischungen hieraus eingesetzt werden.

Unter Gläsern im Sinne dieser Erfindung sind ganz allgemein anorganische Stoffe im amorphen, nichtkristallinen Festzustand zu verstehen.

Auf die Reinheit und die Zusammensetzung der erfindungsgemäß eingesetzten Glasgranulats kommt es nicht an; ein wesentlicher Aspekt der Erfindung ist vielmehr, dass durch die erfindungsgemäß vorgesehene Silanisierung und Beschichtung mit einem Duroplasten Glasgranulat gleich welcher Art auf eine einheitlich hohe Bruchfestigkeit und Alkalibeständigkeit gebracht werden kann. Es kann daher auch kostengünstig erhältliches Recyclingglas eingesetzt werden.

Vorzugsweise wird Klarglas eingesetzt.

Das Glasgranulat weist vorzugsweise einen mittleren Durchmesser von 0,5 bis 64 mm, insbesondere von 1 bis 32 mm, auf.

Die Herstellung, Zusammensetzungen und Eigenschaften der einzelnen Glassorten sind allgemein bekannt und beispielsweise beschrieben in "Kirk-Othmer" (3. Auflage) Bd. 11, S. 807-880; "Ullmanns Enzyklopädie der technischen Chemie" (4. Auflage) Bd. 12, S. 317-366.

Wenn das Glasgranulat gemäß der bevorzugten Ausführungsform aus Klarglas besteht, können besondere optische Effekte mit einer eingefärbten Schutzschicht erzielt werden. Die Einfärbung der Schutzschicht kann durch Zusatz eines geeigneten Farbstoffs zu der organischen Siliciumverbindung oder dem Duroplasten erfolgen. Zur Einfärbung geeignete Farbstoffe sind Pigmentpulver und Pasten organischen und anorganischen Ursprungs.

Durch die zuvor beschriebene Einfärbung entsteht der optische Effekt von "durchgefärbten" transparentem Glas. Dieser Eindruck bleibt selbst dann bestehen, wenn die eingefärbte Schutzschicht bereichsweise von der Oberfläche des Glasgranulates abgetragen wird. In diesem Fall scheint die Farbe von den noch vorhandenen, mit eingefärbter Schutzschicht beschichteten Bereichen durch und erweckt so den Eindruck, dass der gesamte Glaspartikel durchgefärbt ist. Dies bedeutet, dass das mit entsprechend eingefärbten Schutzschicht versehene erfindungsgemäße Glasgranulat selbst nach bereichsweisen Abschleifen oder Abstrahlen den Eindruck von gleichmäßig durchgefärbten Glas hervorrufen. Gegenüber durchgefärbtem Glasgranulat besitzt das mit eingefärbter Schutzschicht beschichtete Glasgranulat den Vorteil, dass es erheblich kostengünstiger ist.

Wegen seiner hohen Bruchfestigkeit und ausgezeichneten Alkalibeständigkeit eignet sich das Glasgranulat zur Verwendung als Zuschlagstoff in Baustoffkörpern oder -belägen.

Insbesondere ist das Glasgranulat geeignet zum Einsatz in mineralisch/anorganischen gebundenen Baustoffkörpern oder -belägen.

Der erfindungsgemäße Baustoffkörper oder -belag kann beispielsweise wie folgt hergestellt werden:

- Herstellen eines Gemischs aus Zemente Zuschlagstoffen und gegebenenfalls weiteren Bindemitteln und Additiven und Anmachen mit Wasser,

- Auftragen des Gemischs auf eine Oberfläche oder in eine Form,

- Einbringen von oberflächenbeschichteten Glaspartikeln in das Gemisch und

- Aushärten des Gemischs zu einem Körper oder Belag.

Gemäß einer bevorzugten Ausführungsform der Erfindung wird das Glasgranulat in den freiliegenden Oberflächenbereichen des Körpers oder Belags mindestens teilweise von der Beschichtung befreit. Dies kann etwa dadurch erfolgen, dass der Körper oder Belag mindestens auf einer seiner Sichtseiten geschliffen oder abgestrahlt ist. Insbesondere in Fällen, in denen das Glasgranulat aus Klarglas besteht und die Beschichtung eingefärbt ist, wird durch das Abschleifen ein besonders ansprechender optischer Effekt erzielt.

Bei der Herstellung von Bodenbelägen hat es sich als besonders vorteilhaft erwiesen, wenn der Beton zunächst auf den Boden aufgetragen wird und das Glasgranulat vor dem Aushärten oberflächlich in den Belag eingestreut wird. Nach dem Aushärten kann der Bodenbelag mit einem geeigneten Schleifgerät eben geschliffen werden.

Je nach beabsichtigten Eigenschaften kann die Menge des Glasgranulats im erfindungsgemäßen Baustoffkörper oder -belag variiert werden. Für Bodenbeläge hat sich eine Menge von 1 bis 75 % (vorzugsweise 5 - 40%) Glasgranulat pro t Beton, bezogen auf die Trockensubstanz, als besonders vorteilhaft erwiesen.

Der erfindungsgemäße Baustoffkörper oder -belag kann ferner weitere übliche Binder wie Acrylat und/oder Epoxydharze oder Polyester enthalten.

Geeignete hydraulische Bindemittel sind beispielsweise Zement und Beton.

Beton im Sinne dieser Erfindung sind gemäß DIN 1045 (Juli 1988) alle Baustoffe, die aus einem Gemisch von Zement, Betonzuschlag u. Wasser - ggf. auch mit Betonzusatzmitteln und Betonzusatzstoffen - durch Erhärten hergestellt werden. Das erfindungsgemäße Glasgranulat ist zum Einsatz in Beton mit verschiedenster Zusammensetzung und Konsistenz geeignet, beispielsweise Leichtbeton, Normalbeton und Schwerbeton, Gas- oder Schaumbeton, Fließbeton, steifer Beton, Stahlbeton und Spannbeton.

Die Herstellung und Eigenschaften von Beton sind allgemein bekannt und beispielsweise beschrieben in Gutcho, "Cement and Mortar Technology and Additives", Park Ridge:Noyes 1980 und in Kirk-Othmer (3. Auflage) Bd. 5, S. 163-193.

Als Zement im Sinne dieser Erfindung kommen alle feingemahlenen hydraulischen Bindemittel in Betracht, die unter Wasseraufnahme an Luft und unter Wasser steinartig erhärten und nach dem Aushärten wasserbeständig sind. Es können Zemente mit verschiedensten hydraulischen Modulen eingesetzt werden.

Geeignete Zementsorten sind beispielsweise Portlandzement, Eisenportlandzement, Hochofenzement, Traß-Zement, Portland-Ölschiefer zement, Traßhochofenzement, Flugaschezement, Phonolithzement, Vulkanzement, Sulfathüttenzement , Tonerdezement, Tonerdeschmelz zement, Quellzement, Tiefbohrzement und Schnellzement. Vorzugsweise wird Portlandzement eingesetzt. Die Herstellung und Eigenschaften der einzelnen Zementsorten sind allgemein bekannt und u.a. beschrieben in "Ullmanns Enzyklopädie der technischen Chemie" (5. Auflage) A5, 489-516.

Als Zuschlagstoffe kommen sämtliche in der Bauindustrie übliche Zuschlagstoffe in Betracht wie Schotter, Kies, Sand, Schlacke, Glas und Kunststoffe. Diese sind dem Fachmann allgemein bekannt und beispielsweise beschrieben in "Kirk-Othmer" (3. Auflage) Bd. 12, S. 712-733 und "Ullmanns Enzyklopädie der technischen Chemie", (4. Auflage) Bd. 13, S. 85-94.

Nachfolgend wird die Herstellung des zum Einsatz in dem erfindungsgemäßen Baustoffkörpers oder -belages bestimmten Glasgranulates anhand eines Ausführungsbeispieles näher beschrieben:

15 kg Glasgranulat aus Alkalisilikatglas mit einer mittleren Partikel-größe von 0-4 mm, wurden in einen Trommelmischer gegeben und bei Raumtemperatur, unter intensivem Mischen, mit einem Gemisch aus 0,45 kg Duroplast (Epoxidharz + Härter) sowie 0,045 kg eines Epoxidkorrespondierenden Silans, versetz. Nach homogener Benetzung des eingesetzten Glasgranulats wurden bei Raumtemperatur, unter intensivem Mischen, 0,1 kg eines anorganischen Farbpigmentpulvers zugegeben. Nach, homogenen Verteilung des Farbpigments, wurde solange bei Raumtemperatur gerührt, bis Klebfreiheit des Glasgranulates eingetreten war.

Das erhaltene Glasgranulat wies eine Beschichtungsdicke von etwa 150 um, eine Mohsche Härte, bestimmt nach 3 Tagen, von etwa 6,0 sowie ein durch hohen Glanz geprägtes ansprechendes Aussehen auf.

Unter dem Begriff Glasgranulat werden Partikel, Stücke bzw. Teilchen aus Glas beliebiger Herkunft und Produktion verstanden, insbesondere auch Glaskugeln, Abschnitte von Rovings, Glasfasern, Glastropfen, Bruchstücke aus größeren Glaskörpern usw..

**Patentansprüche**

1. Baustoffkörper oder -belag, der als wesentliche Bestandteile hydraulisches Bindemittel, Zuschlagstoffe und Glasgranulat enthält, wobei das Glasgranulat oberflächlich mit einer Schutzschicht beschichtet ist, die mindestens eine organische Siliciumverbindung und/oder mindestens einen Duroplasten enthält.

2. Körper oder Belag nach Anspruch 1, **dadurch gekennzeichnet, dass** die organische Siliciumverbindung eine Verbindung der allgemeinen Formel

$$Y\text{-}(CH_2)_n \, SiX_3$$

ist, worin X ein Halogenatom wie Fluor, Chlor, Brom und Jod oder eine Alkoxygruppe mit 1 bis 20 Kohlenstoffatomen, Y eine Amino-, Carboxy-, Cyano-, Methacryloxy-, Epoxy-, Mercapto- oder eine gegebenenfalls alkyl-, aryl-oder aralkyl-substituierte Vinylgruppe und n eine Zahl von 0 bis 30, insbesondere von 0 bis 10, ist.

3. Körper oder Belag nach einem der vorangegangenen Ansprüche, **dadurch gekennzeichnet, dass** der Duroplast ein Diallylphthalat-Harz, Epoxid-Harz, Harnstoff-Formaldehyd-Harz, Melamin-Formaldehyd-Harz, Melamin-Phenol-Formaldehyd-Harz, Phenol-Formaldehyd-Harz oder ein ungesättigter Polyesterharz ist.

4. Körper oder Belag nach Anspruch 3, **dadurch gekennzeichnete dass** der Epoxid-Harz ein Epoxidharzlack auf Basis von Bisphenol-A ist.

5. Körper oder Belag nach einem der vorangegangen Ansprüche **dadurch gekennzeichnet, dass** das Glas im wesentlichen aus Klarglas besteht und die Beschichtung transparent bis deckend eingefärbt ist.

6. Körper oder Belag nach einem der vorangegangenen Ansprüche, **dadurch gekennzeichnet, dass** die Glaspartikel Recyclingglas enthalten.

7. Körper oder Belag nach einem der vorangegangenen Ansprüche, **dadurch gekennzeichnet, dass** die Glaspartikel einen mittlerer Durchmesser von 0,5 bis 64 mm, insbesondere von 1 bis 32 mm, aufweisen.

8. Körper oder Belag Ansprüche nach einem der vorangegangenen Ansprüche, **dadurch gekennzeichnet, dass** das Glasgranulat in den freiliegenden Oberflächenbereichen des Körpers oder Belags mindestens teilweise von der Beschichtung befreit ist.

9. Körper oder Belag nach einem der vorangegangenen Ansprüche, **dadurch gekennzeichnet, dass** er mindestens auf einer seiner Sichtseiten geschliffen oder gestrahlt ist.

10. Körper oder Belag nach einem der vorangegangenen Ansprüche **dadurch gekennzeichnet, dass** das Glasgranulat aus Klarglas besteht.

**Claims**

1. A construction-material body or coating containing hydraulic agglutinant, aggregate materials and glass granulate as essential components, wherein the surface of said glass granulate is coated with a protective layer containing at least one organic silicon compound and/or at least one duroplastic material.

2. A body or coating according to claim 1, **characterized in that** said organic silicon compound is a compound having the general formula

$$Y\text{-}(CH_2)_n \, SiX_3$$

herein X is a halogen atom such as fluorine, chlorine, bromine and iodine or an alcoxy group comprising 1 to 20 carbon atoms, Y is an amino, carboxy, cyano, methacryloxy, epoxy, mercapto or an eventually alkyl-, aryl- or aralkyl-substituted vinyl group, and n is a number from 0 to 30, particularly from 0 to 10.

3. A body or coating according to any of the preceding claims, **characterized in that** said duroplastic material is a diallylphthalate resin, epoxy resin, ureaformaldehyde resin, melamine-formaldehyde resin, melamine-phenol-formaldehyde resin, phenol-formaldehyde resin or an unsaturated polyester resin.

4. A body or coating according to claim 3, **characterized in that** said epoxy resin is an epoxy resin varnish based on bisphenol-A.

5. A body or coating according to any of the preceding claims, **characterized in that** the glass consists essentially of clear glass and that the coating is colored in a transparent to opaque manner.

6. A body or coating according to any of the preceding claims, **characterized in that** the glass particles contain recycling glass.

7. A body or coating according to any of the preceding claims, **characterized in that** the glass particles have a mean diameter ranging from 0,5 to 64mm, particularly from 1 to 32mm.

8. A body or coating according to any of the preceding claims, **characterized in that** the coating of said glass granulate has been removed at least in part in the exposed surface areas of the body or coating.

9. A body or coating according to any of the preceding claims, **characterized in that** it is ground or sandblasted on at least one of its visible sides.

10. A body or coating according to any of the preceding claims, **characterized in that** said glass granulate consists of clear glass.

**Revendications**

1. Matériau de construction sous forme de corps ou de revêtement contenant comme composants essentiels de matière agglutinante hydraulique, des agrégats et verre granulé, ce verre granulé étant couvert d'une couche protectrice contenant au moins un composé organique de silicium et/ou au moins un matériel duroplastic.

2. Corps ou revêtement selon la revendication 1, **caractérisée en ce que** ledit composé organique de silicium est un composé ayant la formule générale

$$Y\text{-}(CH2)n\ SiX3$$

où X est un atome d'halogène tel que le fluor, le chlore, le brome et l'iode ou un groupe d'alcoxy comportant 1 à 20 atomes de carbone, Y est un aminé, un carboxy, un cyano, methacryloxy, époxyde, mercapto ou un alkyl, un aryle ou un groupe aralkyl-substitué de vinyle, et n est un nombre de 0 à 30, en particulier de 0 à 10.

3. Corps ou revêtement selon n'importe laquelle des revendications précédentes, **caractérisé en ce que** ledit matériel duroplastic est une résine de diallylphthalate, la résine époxyde, la résine d'urée-formol, la résine de mélamine-formaldéhyde, la résine de mélamine-phénol-formaldéhyde, la résine de phénol-formaldehyde ou une résine insaturée de polyester.

4. Corps ou revêtement selon la revendication 3, **caractérisée en que** ladite résine époxyde est un vernis de résine époxyde basé sur le bisphenol A.

5. Corps ou revêtement selon n'importe laquelle des revendications précédentes, **caractérisé en ce que** le verre consiste essentiellement en verre clair et cela l'enduit est coloré dans un transparent à la façon opaque.

6. Corps ou revêtement selon n'importe laquelle des revendications précédentes, **caractérisé en ce que** les particules de verre contiennent réutiliser le verre.

7. Corps ou revêtement selon n'importe laquelle des revendications précédentes, **caractérisé en ce que** les particules de verre ont un diamètre moyen s'étendre de 0.5 à 64mm, en particulier de 1 à 32mm.

8. Corps ou revêtement selon n'importe laquelle des revendications précédentes, **caractérisé en ce que que** l'enduit de ledit verre granulent a été enlevé au moins en partie dans les superficies exposées du corps ou de l'enduit.

9. Corps ou revêtement selon n'importe laquelle des revendications précédentes, **caractérisé en ce que** il est rectifié ou sandblasted sur au moins un de ses côtés évidents.

10. Corps ou revêtement selon n'importe laquelle des revendications précédentes, **caractérisé en ce que** ledit verre granulent se compose du verre clair.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR 2307092 A
- DE 2307092 A

- DE 4120764

**In der Beschreibung aufgeführte Nicht-Patentliteratur**

- Ullmanns Enzyklopädie der technischen Chemie. vol. 21, 498-499
- **BAUER ; WOEBCKEN.** Verarbeitung duroplastischer Formmassen. Hanser Verlag, 1973
- Physik der Duroplaste und anderer Polymerer. Kunststoff-Taschenbuch. Hanser-Verlag, 1978, vol. 23, 2-5 378443
- Ullmanns Enzyklopädie der technischen Chemie. vol. 15, 309-335477-481
- **WOEBCKEN.** Duroplaste, Kunststoff-Handbuch. Hanser-Verlag, 1988, vol. 10

- Kirk-Othmer. vol. 11, 807-880
- Ullmanns Enzyklopädie der technischen Chemie. vol. 12, 317-366
- **GUTCHO.** Cement and Mortar Technology and Additives. Park Ridge: Noyes, 1980
- Kirk-Othmer. vol. 5, 163-193
- Ullmanns Enzyklopädie der technischen Chemie. vol. A5, 489-516
- Kirk-Othmer. vol. 12, 712-733
- Ullmanns Enzyklopädie der technischen Chemie. vol. 13, 85-94